(19) Europäisches Patentamt
European Patent Office
Office européen des brevets

(11) **EP 3 644 327 A1**

(12) **EUROPEAN PATENT APPLICATION**
published in accordance with Art. 153(4) EPC

(43) Date of publication:
**29.04.2020 Bulletin 2020/18**

(21) Application number: **17915096.6**

(22) Date of filing: **07.12.2017**

(51) Int Cl.:
*H01B 9/02* (2006.01)     *H01B 7/02* (2006.01)
*H01B 1/20* (2006.01)     *H01B 3/30* (2006.01)
*H01B 3/10* (2006.01)     *H01B 3/12* (2006.01)

(86) International application number:
**PCT/KR2017/014344**

(87) International publication number:
**WO 2018/236013 (27.12.2018 Gazette 2018/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **22.06.2017  KR 20170078845
14.11.2017  KR 20170151398**

(71) Applicant: **LS Cable & System Ltd.
Anyang-si, Gyeonggi-do 14119 (KR)**

(72) Inventors:
• **JUNG, Hyun Jung
  Seoul 06999 (KR)**
• **NAM, Jin Ho
  Seoul 06097 (KR)**
• **NAM, Gi Joon
  Seoul 06510 (KR)**
• **CHO, Young Eun
  Seoul 07420 (KR)**

(74) Representative: **advotec.
Patent- und Rechtsanwälte
Widenmayerstrasse 4
80538 München (DE)**

(54)  **DIRECT CURRENT POWER CABLE**

(57)     Provided is a direct-current (DC) power cable. Specifically, the present invention relates to a DC power cable capable of preventing both a decrease in DC dielectric strength and a decrease in impulse breakdown strength due to space charge accumulation, and reducing manufacturing costs without lowering the extrudability of an insulating layer and the like.

Fig. 5

**Description**

TECHNICAL FIELD

The present invention relates to a direct-current (DC) power cable. Specifically, the present invention relates to a DC power cable capable of preventing both a decrease in DC dielectric strength and a decrease in impulse breakdown strength due to space charge accumulation, and reducing manufacturing costs without lowering the extrudability of an insulating layer and the like.

BACKGCIRCULAR ART

In general, in a large power system requiring large-capacity and long-distance power transmission, high voltage transmission is necessary to increase a transmission voltage in terms of a reduction of power loss, a construction site problem, and an increase in power transmission capacity.

Power transmission methods may be largely classified into an alternating-current (AC) power transmission method and a direct-current (DC) power transmission method. The DC power transmission method refers to transmission of power by direct current. Specifically, in the DC power transmission method, first, a power transmission side converts AC power into an appropriate voltage, converts the voltage into direct current by a converter, and transmits the direct current to a power reception side via a transmission line, and the power reception side converts the direct current into AC power by an inverter.

In particular, the DC transmission method has been widely used because this method is advantageous in transmitting a large amount of power over a long distance and can be operated in connection with an asynchronous power system, and a loss rate of direct current is low and a stability thereof is high in long-distance transmission, compared to alternating current.

However, when power is transmitted using a high-voltage DC power transmission cable, insulation characteristics of an insulator of the cable remarkably decreases when the temperature of the insulator increases or when a negative impulse or polarity reversal occurs. It is known that this problem is due to the accumulation of long-life space charges as a group of charges are trapped or not discharged in the insulator.

The space charges may distort an electric field in the insulator of the high-voltage DC power transmission cable and thus dielectric breakdown may occur at a voltage lower than an initially designed breakdown voltage.

A technique for adding inorganic particles, such as aluminum silicate, calcium silicate, calcium carbonate, magnesium oxide, or the like, to an insulating base resin constituting the insulating layer of the cable has been used to prevent a decrease in DC dielectric strength and breakdown voltage of the cable due to the space charge accumulation.

However, space charge accumulation occurs inevitably due to various causes, such as charges injected into the insulating layer from a conductor of the cable, crosslinking by-products inevitably generated due to crosslinking of the insulating layer, crosslinking by-products inevitably generated due to crosslinking of a semiconducting layer in contact with the insulating layer and flowing into the insulating layer, and a polar monomer contained in a base resin constituting the semiconducting layer and flowing into the insulating layer. Thus, the space charge accumulation and a decrease in DC dielectric strength and breakdown voltage due to the space charge accumulation were not completely prevented by simply adding the inorganic particles to the insulating layer.

In addition, when the amount of the inorganic particles to be added to the insulating layer is increased to solve the problem, the inorganic particles may act as impurities and thus not only the extrudability of the insulating layer but also impulse strength which is an important factor required in the power cable decrease. Due to the above problems, a thickness of the insulating layer of the DC power cable is determined by impulse strength rather than a dielectric breakdown voltage of the cable and thus an outer diameter of the cable increases, thereby causing problems in terms of manufacturing and economic feasibility. Alternatively, the thickness of the insulating layer of the DC power cable is determined by the dielectric breakdown voltage and impulse strength of the cable and thus an outer diameter of the cable increases, thereby causing problems in terms of manufacturing and economic feasibility.

Accordingly, there is an urgent need for a DC power cable capable of preventing both a decrease in DC dielectric strength and a decrease in impulse breakdown strength due to space charge accumulation and reducing manufacturing costs without reducing the extrudability of an insulating layer and the like.

DETAILED DESCRIPTION OF THE INVENTION

TECHNICAL PROBLEM

The present invention is directed to providing a direct-current (DC) power cable capable of preventing both a decrease in DC dielectric strength and a decrease in impulse breakage strength due to space charge accumulation.

The present invention is also directed to providing a DC power cable capable of reducing manufacturing costs without lowering the extrudability of an insulating layer and the like.

TECHNICAL SOLUTION

According to an aspect of the present invention, provided is a direct-current (DC) power cable comprising: a conductor; an inner semiconducting layer surrounding the conductor; an insulating layer covering the inner semiconducting layer; an outer semiconducting layer covering the insulating layer; and an outer cover covering the outer semiconducting layer, wherein the inner semiconducting layer or the outer semiconducting layer is formed of a semiconducting composition including a copolymer resin of an olefin and a polar monomer as a base resin and conductive particles dispersed in the resin, an amount of the polar monomer is 18 wt% or less, based on total weight of the copolymer resin, the insulating layer is formed of an insulation composition including a polyolefin resin as a base resin and inorganic particles dispersed in the resin, the inorganic particles including at least one selected from the group consisting of aluminum silicate, calcium silicate, calcium carbonate, magnesium oxide, carbon nanotubes and graphite, an amount of the inorganic particles is 0.01 to 10 parts by weight, based on 100 parts by weight of the base resin of the insulating layer, and

a field enhancement factor (FEF) of the insulating layer defined by the following Equation 2 is in a range of 100 to 140%:

[Equation 2]

FEF=(maximally increased electric field in sample/electric field applied to sample)*100,

wherein the sample comprises:

an insulating film having a thickness of 120 $\mu$m and formed of an insulation composition of the insulating layer; and semiconducting films respectively bonded to an upper surface and a lower surface of the insulating film, each having a thickness of 50 $\mu$m, and formed of the semiconducting composition,
the electric field applied to the sample comprises a 50 kV/mm DC electric field applied to the insulating film for one hour, and the maximally increased electric field comprises a maximum value among increase values of the electric field for one hour during which the DC electric field is applied to the insulating film.

According to another aspect of the present invention, provided is the DC power cable, wherein the insulation composition or the semiconducting composition further comprises a crosslinking agent, wherein an amount of the crosslinking agent is 0.1 to 5 parts by weight, based on 100 parts by weight of the base resin.

According to other aspect of the present invention, provided is the DC power cable, wherein the polar monomer comprises an acrylate monomer.

According to other aspect of the present invention, provided is the DC power cable, wherein the inorganic particles comprise magnesium oxide.

According to other aspect of the present invention, provided is the DC power cable, wherein the inorganic particles are surface-modified by at least one surface modifier selected from the group consisting of vinylsilane, stearic acid, oleic acid and aminopolysiloxane.

According to other aspect of the present invention, provided is the DC power cable, wherein the copolymer resin comprises at least one selected from the group consisting of ethylene vinyl acetate (EVA), ethylene methyl acrylate (EMA), ethylene methyl methacrylate (EMMA), ethylene ethyl acrylate (EEA), ethylene ethyl methacrylate (EEMA), ethylene (iso) propyl acrylate (EPA), ethylene (iso) propyl methacrylate (EPMA), ethylene butyl acrylate (EBA), and ethylene butyl methacrylate (EBMA).

According to other aspect of the present invention, provided is the DC power cable, wherein an amount of the inorganic particles is 35 to 70 parts by weight, based on 100 parts by weight of the base resin.

According to other aspect of the present invention, provided is the DC power cable, wherein the crosslinking agent comprises a peroxide crosslinking agent.

According to other aspect of the present invention, provided is the DC power cable, wherein the peroxide crosslinking agent comprises at least one selected from the group consisting of dicumyl peroxide, benzoyl peroxide, lauryl peroxide, t-butyl cumyl peroxide, di (t-butyl peroxy isopropyl) benzene, 2, 5-dimethyl-2, 5-di (t-butyl peroxy) hexane, and di-t-butyl peroxide.

According to other aspect of the present invention, provided is the DC power cable, wherein the polyolefin resin comprises a polyethylene resin as the base resin of the insulating layer.

According to other aspect of the present invention, provided is the DC power cable, wherein the insulation composition comprises at least one scorch inhibitor selected from the group consisting of 2,4-diphenyl-4-methyl-1-pentene, 1,4-hydroquinone, and hydroquinon derivatives, wherein an amount of the scorch inhibitor is 0.1 to 1.0 parts by weight, based on 100 parts by weight of the base resin.

According to other aspect of the present invention, provided is the DC power cable, wherein the scorch inhibitor comprises 2,4-diphenyl-4-methyl-1-pentene.

ADVANTAGEOUS EFFECTS

A direct-current (DC) power cable according to the present invention is advantageous in that a base resin and crosslinking degree of a semiconducting layer can be accurately controlled and an accurately controlled amount of inorganic particles can be added into an insulating layer to prevent accumulation of space charges in the insulating layer and prevent a decrease in DC dielectric strength and a decrease in impulse breaking strength due to space charge accumulation.

In addition, the present invention is advantageous in that the amount of inorganic particles to be contained in the insulating layer to suppress space charges accumulation can be reduced to suppress a decrease in the extrudability of the insulating layer due to the inorganic particles, and an increase in a thickness of the insulating layer can be suppressed to reduce manufacturing costs.

DESCRIPTION OF THE DRAWINGS

FIG. 1 is a schematic cross-sectional view of a power cable according to an embodiment of the present invention.
FIG. 2 is a schematic cross-sectional view of a power cable according to another embodiment of the present invention.
FIG. 3 is a graph showing volume resistivity according to temperature of each of insulating samples according to examples.
FIG. 4 illustrates a result of FT-IR evaluation of insulating+semiconducting samples according to examples.
FIG. 5 illustrates a result of PEA evaluation of insulating+semiconducting samples according to examples.

MODE OF THE INVENTION

Hereinafter, exemplary embodiments of the present invention will be described in detail. The present invention is, however, not limited thereto and may be embodied in many different forms. Rather, the embodiments set forth herein are provided so that this disclosure may be thorough and complete and fully convey the scope of the invention to those skilled in the art. Throughout the specification, the same reference numbers represent the same elements.

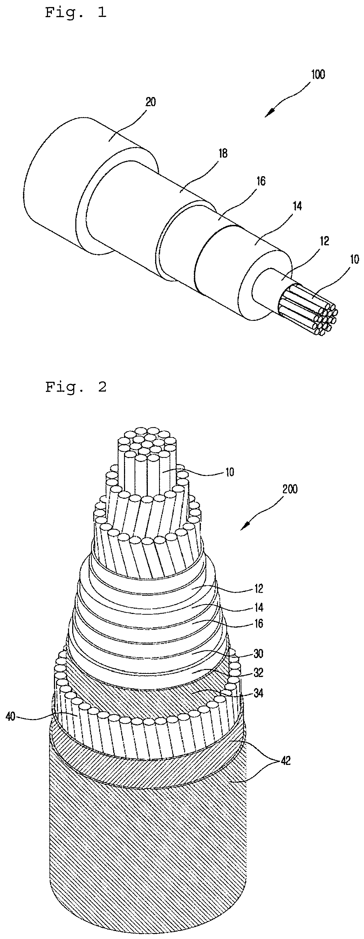

FIG. 1 is a schematic cross-sectional view of a direct-current (DC) power cable according to an embodiment of the present invention. As illustrated in FIG. 1, the DC power cable 100 according to the present invention may include a center conductor 10, an inner semiconducting layer 12 covering the center conductor 10, an insulating layer 14 covering the inner semiconducting layer 12, an outer semiconducting layer 16 covering the insulating layer 14, a shielding layer 18 covering the outer semiconducting layer 16 and formed of a metal sheath or a neutral wire for electrical shielding and a return for short-circuit current, an outer cover 20 covering the shielding layer 18, and the like.

FIG. 2 is a schematic cross-sectional view of a DC power cable according to another embodiment of the present invention. A schematic cross-sectional view of a submarine cable is illustrated herein.

As illustrated in FIG. 2, a conductor 10, an inner semiconducting layer 12, an insulating layer 14, and an outer semiconducting layer 16 of a DC power cable 200 according to the present invention are substantially the same as those of the embodiment of FIG. 1 described above and thus a description thereof are omitted.

A metal sheath formed of lead, so-called a 'lead sheath' 30, is provided on an outer side of the outer semiconducting layer 16 to prevent deterioration of the insulation performance of the insulating layer 14 due to intrusion of a foreign substance such as external water.

Furthermore, a bedding layer 34 is provided on an outer side of the lead sheath 30 to prevent the sheath 32 formed of a resin, such as polyethylene, from being in direct contact with water. A wire sheath 40 may be provided on the bedding layer 34. The wire sheath 40 is provided on an outer side of the cable to increase mechanical strength so as to protect the cable from an external environment at the seabed.

A jacket 4 is provided as an outer cover of the cable on an outer side of the wire sheath 40, i.e. , an outer side of the cable. The jacket 42 is provided on the outer side of the cable to protect the internal components of the cable 200.

In particular, in the case of a submarine cable, the jacket 42 has high weather resistance and high mechanical strength to withstand a submarine environment such as seawater. For example, the jacket 42 may be formed of polypropylene yarn or the like.

The center conductor 10 may be a single wire formed of copper or aluminum, and preferably, copper, or a stranded wire consisting of a plurality of wires. The specifications of the center conductor 10, e.g. , a diameter of the center conductor 10, a diameter of the wires of the stranded wire, etc., may vary according to a transmission voltage, use, etc. of the DC power cable including the center conductor 10, and may be appropriately selected by those of ordinary skill in the art. For example, when the DC power cable according to the present invention is used as a submarine cable requiring installation properties, flexibility, etc., the center conductor 10 is preferably a stranded wire having higher flexibility than a single wire.

The inner semiconducting layer 12 is disposed between the center conductor 10 and the insulating layer 14 to eliminate an air layer causing peeling-off between the center conductor 10 and the insulating layer 14 and alleviate local electric field concentration. The outer semiconducting layer 16 allows a uniform electric field to be applied to the insulating layer 14, alleviates local electric field concentration, and protects the insulating layer 14 of the cable from the outside.

In general, the inner semiconducting layer 12 and the outer semiconducting layer 16 are formed by extrusion of a semiconducting composition in which conductive particles, such as carbon black, carbon nanotubes, carbon nanoplates or graphite, are dispersed in a base resin and a crosslinking agent, an antioxidant, a scorch inhibitor, or the like is additionally added.

Here, the base resin is preferably formed of an olefin resin similar to the base resin of an insulation composition of the insulating layer 14 for interlayer adhesion between the semiconducting layers 12 and 16 and the insulating layer 14. More preferably, the base resin is formed of olefin and a polar monomer, e.g., ethylene vinyl acetate (EVA), ethylene methyl acrylate (EMA), ethylene methyl methacrylate (EMMA), ethylene ethyl acrylate (EEA), ethylene ethyl methacrylate (EEMA), ethylene (iso) propyl acrylate (EPA), ethylene (iso) propyl methacrylate (EPMA), ethylene butyl acrylate (EBA), ethylene butyl methacrylate (EBMA) or the like, in consideration of compatibility with the conductive particles.

In addition, the crosslinking agent may be a silane crosslinking agent or an organic peroxide crosslinking agent, such as dicumyl peroxide, benzoyl peroxide, lauryl peroxide, t-butyl cumyl peroxide, di(t-butyl peroxy isopropyl) benzene, 2,5-dimethyl-2,5-di(t-butyl peroxy) hexane, or di-t-butyl peroxide.

A copolymer resin of olefin and a polar monomer and/or a polar monomer, when used as a base resin contained in a semiconducting composition for forming the inner semiconducting layer 12 and the outer semiconducting layer 16, may move into the insulating layer 14 via an interface between the inner semiconducting layer 12 and the insulating layer 14, thereby accelerating accumulation of space charges in the insulating layer 14. Furthermore, crosslinking by-products generated during crosslinking of the semiconducting layers 12 and 16 may move into the insulating layer 14 via the interface between the inner semiconducting layer 12 and the insulating layer 14 and thus distortion of an electric field may be accelerated due to accumulation of heterocharges in the insulating layer 14, thereby lowering a breakdown voltage of the insulating layer 14.

Specifically, in the DC power cable according to the present invention, an amount of the copolymer resin of olefin and the polar monomer may be about 60 to 70 wt%, based on the total weight of the semiconducting composition of the semiconducting layer 12, and an amount of the polar monomer may be accurately controlled to be 1 to 18 wt%, and preferably, 1 to 12 wt%, based on total weight of the copolymer resin.

Here, when the amount of the polar monomer is greater than 18 wt%, the accumulation of space charges in the insulating layer 14 may be greatly accelerated, whereas when the amount of the polar monomer is less than 1 wt%, the compatibility between the base resin and the conductive particles may decrease and the extrudability of the semiconducting layers 12 and 16 may be reduced and thus semiconducting characteristics may not be realized.

In addition, in the DC power cable according to the present invention, in the semiconducting composition of the inner semiconducting layer 12, the amount of the crosslinking agent may be accurately controlled to be 0.1 to 5 parts by weight, and preferably, 0.1 to 1.5 parts by weight, based on 100 parts by weight of the base resin.

Here, when the amount of the crosslinking agent is greater than 5 parts by weight, the amount of crosslinking by-products inevitably generated during crosslinking of the base resin contained in the semiconducting composition may be excessive and move into the insulating layer 14 via the interface between the semiconducting layers 12 and 16 the insulating layer 14 and thus distortion of an electric field may be accelerated due to the accumulation of heterocharges, thereby reducing a breakdown voltage of the insulating layer 14. In contrast, when the amount of the crosslinking agent is less than 0.1 parts by weight, a degree of crosslinking is insufficient and thus mechanical properties, heat resistance, etc. of the semiconducting layers 12 and 16 may be insufficient.

In the DC power cable according to the present invention, the semiconducting composition of the inner and outer semiconducting layers 12 and 16 may contain 35 to 70 parts by weight of conductive particles such as carbon black, based on 100 parts by weight of the base resin. When the amount of the conductive particles is less than 35 parts by weight, sufficient semiconducting properties may not be realized, whereas when the amount of the conductive particles is greater than 70 parts by weight, the extrudability of the inner and outer semiconducting layers 12 and 16 may decrease and thus surface properties or productivity may be lowered.

The insulating layer 14 may be formed of, for example, a polyolefin resin, such as polyethylene or polypropylene, as a base resin, and may be preferably formed by extrusion of an insulation composition containing a polyethylene resin and inorganic particles.

The polyethylene resin may include ultra-low-density polyethylene (ULDPE), low-density polyethylene (LDPE), linear low-density polyethylene (LLDPE), medium-density polyethylene (MDPE), high-density polyethylene (HDPE), or a combination thereof. Alternatively, the polyethylene resin may include a homopolymer, a random or block copolymer of $\alpha$-olefin, such as ethylene, propylene, 1-butene, 1-pentene, 1-hexene, or 1-octene, or a combination thereof.

The inorganic particles may be nano-sized aluminum silicate, calcium silicate, calcium carbonate, magnesium oxide, carbon nanotubes, graphite or the like. Magnesium oxide is preferable as the inorganic particles in view of the impulse strength of the insulating layer 14. The magnesium oxide may be obtained from natural ores but may also be prepared from artificial synthetic raw materials using magnesium salt in seawater, and can be supplied as a stable material with high purity and quality.

The magnesium oxide basically has a face-centered cubic crystal structure but may have various forms, purity, crystallinity, physical properties, etc. according to a synthesis method. Specifically, the magnesium oxide may be classified as a cubic type, a terrace type, a rod type, a porous type, or a spherical type, can be used in various ways according to unique properties thereof, and forms a potential well at the boundary between the base resin and the inorganic particles, thereby suppressing charge transfer and space charge accumulation

In addition, carbon nanoparticles or carbon nanotubes including the graphite may be in various forms and remove space charges generated in an ultra-high voltage DC transmission cable while maintaining insulation performance, thereby minimizing an insulation-voltage drop causing dielectric breakdown to occur at voltages lower than an initially designed breakdown voltage of an insulator of a high-voltage DC transmission cable. In particular, partially carbonized graphite nanofibers are not electrically connected due to a remaining PAN structure and thus have insulating properties but may act as a trap site for removing space charges because sufficient polarization occurs due to an external electric field caused by some graphite structures.

The inorganic particles such as magnesium oxide form a potential well at the boundary between the base resin and the inorganic particles when an electric field is applied to the cable, thereby suppressing charge transfer and space charge accumulation.

The permittivity of the inorganic particles is generally higher than that of the base resin. For example, the permittivity of magnesium oxide when used as the inorganic nanoparticles is about 10, whereas the permittivity of low-density polyethylene (LDPE) when used as the base resin is about 2.2 to 2.3. Therefore, the permittivity of the insulation composition in which the inorganic nanoparticles are added to the base resin should be higher than that of the base resin.

It was experimentally found that when the inorganic particles had a nanoscale size, e.g., 1 nm to 100 $\mu$m, and preferably, 1 to 100 nm, the permittivity of the insulation composition was rather lower than that of the base resin and an impulse breakdown voltage was increased, unlike when micro-scale inorganic particles were added.

The reason why the permittivity of the insulation composition was lower than that of the base resin when the inorganic particles had the nanoscale size was not found out but is considered due to the so-called nano effect and interfacial stabilization in the base resin, achieved by adjusting the size of the inorganic particles to a nanoscale size.

That is, the permittivity of the insulation composition including the inorganic particles may be reduced by adjusting the size of the inorganic particles to a nanoscale size and thus an impulse breakdown voltage of the insulating layer formed of the insulation composition may increase, thereby increasing the lifespan of the cable including the insulating layer.

Accordingly, a permittivity reduction rate (%) of an insulation composition according to the present invention defined by Equation 1 below may be 1% or more, preferably 2% or more, and more preferably 5% or more.

$$[Equation\ 1]$$

$$Decrease\ in\ permittivity\ (\%)\ =\ [(a-b)/a]*100$$

In Equation 1 above, a represents the permittivity of the base resin and b represents the permittivity of the insulation composition.

The inorganic nanoparticles may have, for example, a terrace shape, a cubic shape, a rod shape, an edgeless shape, or the like. The cubit shape is preferable in terms of interfacial stabilization in the base resin.

Preferably, the inorganic particles, including magnesium oxide, may be surface-modified with vinylsilane, stearic acid, oleic acid, aminopolysiloxane, or the like. In general, the inorganic particles such as magnesium oxide have hydrophile property having high surface energy, whereas the base resin such as polyethylene has hydrophobic property having low surface energy. Thus, the dispersibility of the inorganic particles such as magnesium oxide in the base resin such as polyethylene is low and may adversely affect electrical properties. Therefore, in order to solve this problem, the inorganic particles such as magnesium oxide may be surface-modified.

When the inorganic particles such as magnesium oxide are not surface-modified, gaps may occur between the inorganic particles and the base resin such as polyethylene, thereby lowering mechanical properties and deteriorating electrical insulating properties such as dielectric breakdown strength. On the other hand, when the inorganic particles such as magnesium oxide are surface-modified with vinyl silane or the like, the inorganic particles exhibit excellent dispersibility with respect to the base resin such as polyethylene and show improved electrical properties. A hydrolyzable group such as vinylsilane is chemically bonded to a surface of magnesium oxide or the like by a condensation reaction to form surface-modified inorganic particles. Thus, a silane group of the inorganic particles surface-modified with the vinylsilane or the like reacts with the base resin such as polyethylene and thus excellent dispersibility is achieved.

In addition, the inorganic particles such as magnesium oxide may be in a single crystal form or a polycrystalline crystal form, and be contained in the insulation composition in an amount of 0.01 to 10 parts by weight based on 100 parts by weight of the base resin. An effect of reducing space charge accumulation may be insufficient when the amount of the inorganic particles is less than 0.01 parts by weight, and impulse strength, mechanical properties, and continuous extrudability may decrease when the amount of the inorganic particles is greater than 10 parts by weight.

In addition, the insulation composition of the insulating layer 14 may include a crosslinking agent and thus the insulating layer 14 may formed of crosslinked polyolefin (XLPO), and preferably, crosslinked polyethylene (XLPE), by a separate crosslinking process during or after extrusion.

The crosslinking agent contained in the insulation composition may be the same as that contained in the semiconducting composition, and may be, for example, a silane crosslinking agent or an organic peroxide crosslinking agent, such as dicumyl peroxide, benzoyl peroxide, lauryl peroxide, t-butyl cumyl peroxide, di(t-butyl peroxy isopropyl) benzene, 2,5-dimethyl-2,5-di(t-butyl peroxy) hexane, or di-t-butyl peroxide. Here, in the insulation composition, the crosslinking agent may be contained in an amount of 0.1 to 5 parts by weight, based on 100 parts by weight of the base resin.

In addition, the insulation composition may further include other additives such as an antioxidant, a heat resistant agent, an extrudability enhancer, an ion scavenger, a scorch inhibitor, a crosslinking aid, and the like.

In particular, the antioxidant may be selected from the group consisting of an amine-based antioxidant; an thioester antioxidant such as dialkyl ester-group, a disteryl thiodipropionate, and dilauryl thiodipropionate; a phenyl-based antioxidant such as tetrakis(2,4-di-t-butylphenyl) 4,4'-biphenylene diphosphite, 2,2'-thio diethyl bis-[3-(3,5-di-t-butyl-4-hydroxyphenyl)-propionate], pentaerythryl-tetrakis- [3- (3,5-di-t-butyl-4-hydroxyphenyl) -propionate], 4,4'-thiobis (2-methyl-6-t-butylphenol), 2,2'-thiobis (6-t-butyl-4-methylphenol), triethylene glycol-bis-[3-(3-t-butyl-4-hydroxy-5-methylphenyl)propionate]); and a mixture thereof. Here, the antioxidant may be used in an amount of 0.1 to 2 parts by weight, based on 100 parts by weight of the base resin.

The heat-resistant agent may be selected from the group consisting of a reactant of diphenylamine and acetone, zinc 2-mercaptobenzimidazolate, 4,4'-bis(($\alpha,\alpha$-dimethylbenzyl) diphenylamine, pentaerythritol-tetrakis [3-(3,5-di-tert-butyl-4-hydroxy-phenyl)-propionate], pentaerythritol-tetrakis-($\beta$-lauryl-cyoplopionate, 2,2'-thiodiethylenebis- [3-(3,5-diter, butyl-4-hydroxyphenyl)-propionate], distearyl-ester of $\beta,\beta'$-thiodipropionic acid, and mixtures thereof. Here, the heat-resistant agent may be used in an amount of 0.1 to 2 parts by weight, based on 100 parts by weight of the base resin.

An aryl silane or the like may be used as the ion scavenger. Here, the ion scavenger may be used in an amount of 0.1 to 2 parts by weight, based on 100 parts by weight of the base resin, and may promote an effect of reducing space charge accumulation.

The scorch inhibitor increases the crosslinking efficiency of the crosslinking agent and improve scorch resistance. For example, the scorch inhibitor includes, but is not limited to, at least one selected from the group consisting of 2,4-diphenyl-4-methyl-1-pentene, 1,4-hydroquinone, and hydroquinone derivatives. Specifically 2,4-diphenyl-4-methyl-1-pentene may be used. The amount of the scorch inhibitor may be 0.1 to 1.0 parts by weight, and preferably, 0.2 to 0.8 parts by weight, based on 100 parts by weight of the base resin. An effect of promoting crosslinking is low when the amount of the scorch inhibitor is less than 0.1 parts by weight, and the crosslinking efficiency decreases when the amount of the scorch inhibitor is 1.0 parts by weight.

The present inventors have completed the present invention by experimentally proving that designed DC dielectric strength and breakdown voltage of a cable were capable of being maintained at the same level when a field enhancement factor (FEF) of the insulating layer 14, defined by Equation 2 below, was 100 to 140%, based on an assumption that in a DC power cable according to the present invention, an electric field applied to the insulating layer 14 may be distorted due to the accumulation of space charges in the insulating layer 14 and thus DC dielectric strength may decrease.

[Equation 2]

```
FEF=(maximally increased electric field in sample/electric field applied to sample)*100
```

In Equation 2 above, the sample includes an insulating film having a thickness of 120 $\mu$m and formed of an insulation composition of the insulating layer 14; and semiconducting films respectively bonded to an upper surface and a lower surface of the insulating film, each having a thickness of 50 $\mu$m, and formed of the semiconducting composition, the electric field applied to the sample is a 50 kV/mm DC electric field applied to the insulating film for one hour, and the maximally increased electric field is a maximum value among increase values of the electric field for one hour during which the DC electric field is applied to the insulating film.

That is, the present inventors have completed the present invention by experimentally proving that when the FEF of the insulating layer 14 was greater than 140%, the electric field was greatly distorted due to excessive accumulation of space charges in the insulating layer 14 and thus DC dielectric strength and breakdown voltage decreased sharply.

In addition, the FEF of the insulating layer 14 may be accurately controlled by accurately controlling the amount of the inorganic particles contained in the insulating layer 14 and the amounts of the polar monomer and the crosslinking agent contained in the semiconducting layers 12 and 16.

The jacket layer 42 ("자켓"의 부재번호는 42가 맞는 것 같습니다~) may include polyethylene, polyvinyl chloride, polyurethane, or the like. For example, the jacket layer 20 may be formed of, preferably, a polyethylene resin, and more preferably, a high-density polyethylene (HDPE) resin in consideration of mechanical strength because the jacket layer 20 is provided on an outermost side of the cable. In addition, the jacket layer 20 may include a small amount of an additive such as carbon black, for example, 2 to 3 wt% of the additive, to implement a color of the DC power cable, and have a thickness of, for example, 0.1 to 8 mm.

[Examples]

1. Preparation example

1) Preparation Examples of insulating+semiconducting samples for PEA and FT-IR Evaluations

For a pulsed electro-acoustic (PEA) evaluation, samples were prepared using an insulating thin-film and an insulating+semiconducting thin-film as illustrated in a figure below.

(a) insulating thin-film    (b) insulating+semiconducting film

The insulating thin-film was prepared by manufacturing a thin film by heat-compressing an insulation composition containing a polyethylene resin, magnesium oxide surface-treated as inorganic particles with vinyl silane, a peroxide crosslinking agent, and other additives at 120 °C for five minutes, crosslinking the thin film at 180 °C for eight minutes, cooling a resultant structure to 120 °C, and then cooling the resultant structure at room temperature. The thickness of the prepared insulating thin-film was about 120 $\mu$m.

The insulating+semiconducting thin-film was prepared by manufacturing an insulating film by heat-compressing an insulation composition containing a polyethylene resin, magnesium oxide surface-treated as inorganic particles with vinyl silane, a peroxide crosslinking agent, and other additives at 120 °C for five minutes, manufacturing a semiconducting thin-film by heat-compressing a semiconducting composition containing a butyl acrylate (BA)-containing resin, a crosslinking agent and other additives at 120 °C for five minutes, bonding the semiconducting thin-film to front and rear surfaces of the insulating thin-film, melting a resultant structure at 120 °C for five minutes to thermally bond them to each other, crosslinking the resultant structure at 180 °C for eight minutes, cooling the resultant structure to 120 °C, and then cooling the resultant structure at room temperature. The thicknesses of the prepared insulating film and semiconducting film were about 120 $\mu$m and about 50 $\mu$m, respectively.

Here, an insulating+semiconducting thin-film including a semiconducting thin-film formed of a semiconducting composition (SC-a) in which an amount of butyl acrylate (BA) was 17 wt% based on the total weight of the resin, and an insulating+semiconducting thin-film including a semiconducting thin-film formed of a semiconducting composition (SC-b) in which an amount of a butyl acrylate (BA) was 3 wt% based on the total weight of the resin were prepared.

For an FT-IR evaluation, thicker films were prepared, in which the thicknesses of the insulating film and the insulating thin-film was 20 mm and the thickness of the semiconducting film was 1 mm. In the insulating+semiconducting thin-film, the semiconducting film was bonded to only one side of the insulating film and the resultant structure was cut into a cross section by a 1-mm microtome. In addition, films were additionally prepared by removing crosslinking by-products from the insulating thin-film, the insulating+semiconducting (SC-a) thin-film, and the insulating+semiconducting (SC-b) thin-film by performing degassing in a vacuum state at 70 °C for 5 days.

2) Preparation examples of model cables for impulse breakdown test

In order to prepare model cables for the impulse breakdown test, insulation compositions A and B of Table 1 below were prepared. Units of the amounts shown in Table 1 below are wt%.

[Table 1]

|  | insulation composition A | insulation composition B |
|---|---|---|
| base resin | 100 | 100 |
| inorganic particles | 1 | 0 |
| crosslinking agent | 2 | 2 |
| antioxidant | 0.4 | 0.4 |

- base resin: low-density polyethylene resin (LG Chemicals, LE2030; density: 085 to 0.95 $kg/m^2$; melting index (MI): 1 to 2)

- inorganic particles: magnesium oxide surface-modified with vinylsilane (average particle size: 200 nm)

- crosslinking agent: dicumyl peroxide

- antioxidant: tetrakis(2,4-di-t-butylphenyl)4,4'-biphenylene diphosphate

In addition, an insulating layer formed of the insulation composition A or B and an inner semiconducting layer and an outer semiconducting layer formed of the semiconducting composition (SC-a) or the semiconducting composition (SC-b) were prepared to manufacture model cables A to D each having a diameter of 4 mm and a conductor having a cross-sectional area of 400 sq. Specific configurations of the inner semiconducting layer, the insulating layer and the outer semiconducting layer of each of the model cables A to D are as shown in Table 2 below.

[Table 2]

|  | inner semiconducting layer | insulating layer | outer semiconducting layer |
|---|---|---|---|
| model cable A | semiconducting composition (SC-a) | insulation composition A | semiconducting composition (SC-a) |
| model cable B | semiconducting composition (SC-b) | insulation composition A | semiconducting composition (SC-b) |
| model cable C | semiconducting composition (SC-a) | insulation composition B | semiconducting composition (SC-a) |
| model cable D | semiconducting composition (SC-b) | insulation composition B | semiconducting composition (SC-b) |

2. Evaluation of physical properties

1) FT-IR evaluation of insulating+semiconducting samples

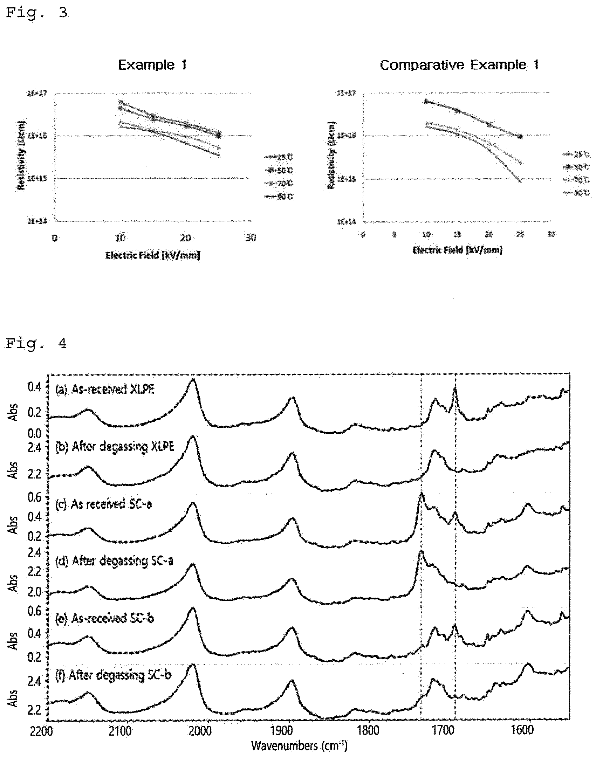

Spectral data is collected in a range of 4000 to 650 cm$^{-1}$ with a resolution of 4 cm$^{-1}$ by scanning 64 times to determine whether there was a transfer of acrylate and crosslinked by-products between the insulating film and the semiconducting film. An FT-IR evaluation was performed by a Varian 7000e spectrometer equipped with a microscope and an MCT detector. Evaluation results are as shown in FIG. 4.

As illustrated in FIG. 4, a peak of 1694.3 cm$^{-1}$ indicating acetophenone which is one of crosslinking by-products was observed from an insulating thin-film (a), an insulating+semiconducting (SC-a) thin-film (c), and an insulating+semiconducting (SC-b) thin-film (e) from which crosslinking by-products were not removed by degassing, whereas the peak of 1694.3 cm$^{-1}$ indicating acetophenone was not observed from an insulating thin-film (b), an insulating+semiconducting (SC-a) thin-film (d), and an insulating+semiconducting (SC-b) thin-film (f) from which crosslinking by-products were removed by degassing.

In addition, a peak of 1735. 6 cm$^{-1}$ indicating an acrylate resin was not observed from the insulating thin-films (a) and (b) to which a semiconducting film was not bonded but was observed from the insulating + semiconducting thin-films (c), (d), (e) and (f) to which a semiconducting film was bonded. In particular, an intensity of the peak of 1735.6 cm$^{-1}$ indicating an acrylate resin was high in the insulating + semiconducting (SC-b) thin film (d) including a semiconducting film with relatively high acrylate content and thus a degree of transfer of the acrylate resin from the semiconducting film to the insulating film was high, compared to the insulating + semiconducting (SC-b) thin film (e) including a semiconducting film with relatively low acrylate content.

2) Evaluation of behaviors of heterocharges and space charges and FETs of insulating+semiconducting samples

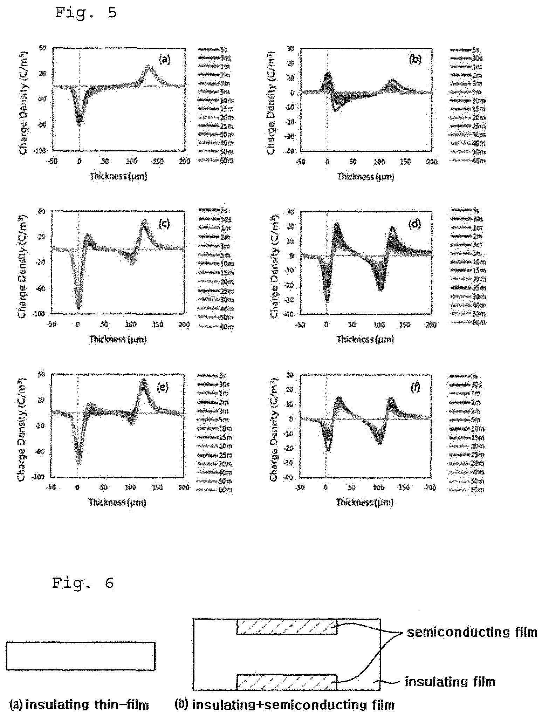

A pulsed electro acoustic (PEA) evaluation was conducted on a sample (a) which is an insulating thin-film, a sample b which is an insulating+semiconducting (SC-a) thin-film, and a sample c which an insulating+semiconducting (SC-b) thin film which were prepared according to preparation examples of samples for the PEA evaluation. Specifically, electrodes were formed on opposite sides of each of these films, a 50kV/mm DC electric field was applied thereto at room temperature for one hour, the applying of the electric field was stopped, and short-circuit was performed for one hour. Current density when the DC electric field was applied and current density when short-circuit was performed were measured using the LabView program. Evaluation results are as shown in FIG. 5.

In a graph of FIG. 5 showing the density of charges according to time, integral values representing an electric field were calculated and a maximum value among the integral values was selected to calculate an FEF using Equation 2 above. A result of measuring increase values of an electric field measured with respect to each of the samples (a), (c), and (c) according to time and calculating FEFs of the samples (a), (c), and (c) are shown in Table 3 below. The numerical values shown in Table 3 below are expressed in kV/mm indicating an electric-field value unless otherwise indicated.

[Table 3]

|  | sample (a) | sample (c) | sample (e) |
|---|---|---|---|
| 5 seconds | 102 | 112 | 104 |
| 30 seconds | 102 | 118 | 106 |
| 1 minute | 102 | 116 | 106 |
| 2 minutes | 102 | 118 | 110 |
| 3 minutes | 104 | 122 | 114 |
| 5 minutes | 106 | 122 | 118 |
| 10 minutes | 108 | 126 | 96 |
| 15 minutes | 106 | 128 | 120 |
| 20 minutes | 106 | 128 | 116 |
| 25 minutes | 106 | 128 | 122 |
| 30 minutes | 108 | 126 | 126 |
| 40 minutes | 106 | 132 | 126 |

(continued)

|  | sample (a) | sample (c) | sample (e) |
|---|---|---|---|
| 50 minutes | 110 | 132 | 124 |
| 60 minutes | 112 | 134 | 124 |
| FET (%) | 112 | 134 | 126 |

As illustrated in FIG. 5, it was determined in the sample (a) that charges moving into the film from the electrodes were trapped by inorganic particles contained in the sample (a) and the sample (a) was not combined with the semiconducting film and thus crosslinking by-products generated during crosslinking of the semiconducting film did not move toward the insulating thin-film, thereby preventing formation of heterocharges, and butyl acrylate (BA) of the semiconducting film did not move toward the insulating thin film and thus a degree of accumulation of space charges was low when a DC electric field was applied (see (a)) and when the application of the DC electric field was stopped (see (b)), thereby reducing an FEF.

In contrast, it was determined in the samples (b) and (c) that because crosslinking by-products or butyl acrylate (BA) of the semiconducting thin-film moved toward the insulating thin-film, heterocharges were formed near an interface between the insulating thin-film and the semiconducting thin-film and a relatively large amount of space charges were accumulated near the interface between the insulating thin-film and the semiconducting thin-film and therefore an FEF was relatively high, and in particular, more space charges were accumulated in the sample (b) containing butyl acrylate BA in a large amount than in the sample (c) containing butyl acrylate BA in a relatively small amount and thus the FET of the sample (b) was higher.

3) Evaluation of impulse breakdown voltage and change of volume resistivity according to temperature

Impulse breakdown voltages of the model cables A to D were measured by applying an impulse voltage of 300 kV using an impulse voltage generator. In detail, voltages when breakdown occurred were measured by applying an impulse voltage to the samples three times while increasing the impulse voltage by 20 kV, starting from an initially applied voltage 300 kV. A measurement result (breakdown probability of 0%) is shown in Table 4 below.

Thereafter, samples were collected from the insulating layers of the model cables A and C, and volume resistivity of each of the samples was measured at 25 °C., 50 °C., 70 °C, and 90 °C. A measurement result is shown in FIG. 3.

[Table 4]

|  | model cable A | model cable B | model cable C | model cable D |
|---|---|---|---|---|
| breakdown voltage (kV/mm) | 100 | 104.5 | 78 | 82 |

As shown in Table 4 above, in the model cables A and cable B each containing inorganic particles, the inorganic particles were polarized under a DC electric field, space charges were capable of being trapped by the polarized inorganic particles, and the inorganic particles were evenly dispersed in the insulating layers. Thus, space charge accumulation and local electric field distortion caused thereby may be prevented, thereby achieving high impulse breakdown voltage. In contrast, in the model cables C and D each not containing inorganic particles, electric field distortion was caused by accumulation of space charges in insulators and thereby impulse breakdown voltage greatly decreased.

In addition, as illustrated in FIG. 3, it was determined that in the model cable A containing inorganic particles in the insulating layer, space charge accumulation was effectively suppressed and thus volume resistivity was nearly maintained constant with increasing temperature and thus dependence of the model cable A on temperature was low, whereas in the model cable C not containing inorganic particles, volume resistivity sharply decreased at 70 °C and 90 °C due to space charge accumulation and thus dependence thereof on temperature was high.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

**Claims**

1. A direct-current (DC) power cable comprising:

   a conductor;
   an inner semiconducting layer surrounding the conductor;
   an insulating layer covering the inner semiconducting layer;
   an outer semiconducting layer covering the insulating layer; and
   an outer cover covering the outer semiconducting layer,
   wherein the inner semiconducting layer or the outer semiconducting layer is formed of a semiconducting composition including a copolymer resin of an olefin and a polar monomer as a base resin and conductive particles dispersed in the resin, an amount of the polar monomer is 18 wt% or less, based on total weight of the copolymer resin,
   the insulating layer is formed of an insulation composition including a polyolefin resin as a base resin and inorganic particles dispersed in the resin, the inorganic particles including at least one selected from the group consisting of aluminum silicate, calcium silicate, calcium carbonate, magnesium oxide, carbon nanotubes and graphite,
   an amount of the inorganic particles is 0.01 to 10 parts by weight, based on 100 parts by weight of the base resin of the insulating layer, and
   a field enhancement factor (FEF) of the insulating layer defined by the following Equation 2 is in a range of 100 to 140%:

   [Equation 2]

   $$\text{FEF} = (\text{maximally increased electric field in sample/electric field applied to sample}) * 100,$$

   wherein the sample comprises:

   an insulating film having a thickness of 120 $\mu$m and formed of an insulation composition of the insulating layer; and
   semiconducting films respectively bonded to an upper surface and a lower surface of the insulating film, each having a thickness of 50 $\mu$m, and formed of the semiconducting composition,

   the electric field applied to the sample comprises a 50 kV/mm DC electric field applied to the insulating film for one hour, and
   the maximally increased electric field comprises a maximum value among increase values of the electric field for one hour during which the DC electric field is applied to the insulating film.

2. The DC power cable of claim 1, wherein the insulation composition or the semiconducting composition further comprises a crosslinking agent,
   wherein an amount of the crosslinking agent is 0.1 to 5 parts by weight, based on 100 parts by weight of the base resin.

3. The DC power cable of claim 1 or 2, wherein the polar monomer comprises an acrylate monomer.

4. The DC power cable of claim 1 or 2, wherein the inorganic particles comprise magnesium oxide.

5. The DC power cable of claim 1 or 2, wherein the inorganic particles are surface-modified by at least one surface modifier selected from the group consisting of vinylsilane, stearic acid, oleic acid and aminopolysiloxane.

6. The DC power cable of claim 1 or 2, wherein the copolymer resin comprises at least one selected from the group consisting of ethylene vinyl acetate (EVA), ethylene methyl acrylate (EMA), ethylene methyl methacrylate (EMMA), ethylene ethyl acrylate (EEA), ethylene ethyl methacrylate (EEMA), ethylene (iso) propyl acrylate (EPA), ethylene (iso) propyl methacrylate (EPMA), ethylene butyl acrylate (EBA), and ethylene butyl methacrylate (EBMA).

7. The DC power cable of claim 6, wherein an amount of the inorganic particles is 35 to 70 parts by weight, based on 100 parts by weight of the base resin.

8. The DC power cable of claim 2, wherein the crosslinking agent comprises a peroxide crosslinking agent.

9. The DC power cable of claim 8, wherein the peroxide crosslinking agent comprises at least one selected from the group consisting of dicumyl peroxide, benzoyl peroxide, lauryl peroxide, t-butyl cumyl peroxide, di (t-butyl peroxy isopropyl) benzene, 2,5-dimethyl-2,5-di(t-butyl peroxy) hexane, and di-t-butyl peroxide.

10. The DC power cable of claim 1 or 2, wherein the polyolefin resin comprises a polyethylene resin as the base resin of the insulating layer.

11. The DC power cable of claim 1 or 2, wherein the insulation composition comprises at least one scorch inhibitor selected from the group consisting of 2,4-diphenyl-4-methyl-1-pentene, 1,4-hydroquinone, and hydroquinon derivatives,
wherein an amount of the scorch inhibitor is 0.1 to 1.0 parts by weight, based on 100 parts by weight of the base resin.

12. The DC power cable of claim 11, wherein the scorch inhibitor comprises 2,4-diphenyl-4-methyl-1-pentene.

Fig. 1

Fig. 2

Fig. 3

Fig. 4

Fig. 5

Fig. 6

(a) insulating thin-film

(b) insulating+semiconducting film

semiconducting film

insulating film

## INTERNATIONAL SEARCH REPORT

International application No.

PCT/KR2017/014344

| A. CLASSIFICATION OF SUBJECT MATTER |
|---|
| *H01B 9/02(2006.01)i, H01B 7/02(2006.01)i, H01B 1/20(2006.01)i, H01B 3/30(2006.01)i, H01B 3/10(2006.01)i, H01B 3/12(2006.01)i* |
| According to International Patent Classification (IPC) or to both national classification and IPC |

**B. FIELDS SEARCHED**

| Minimum documentation searched (classification system followed by classification symbols) |
|---|
| H01B 9/02; C08K 3/00; H01B 3/18; H01B 1/24; H01B 3/30; C08L 23/04; C08L 23/08; H01B 7/02; H01B 1/20; H01B 3/10; H01B 3/12 |

| Documentation searched other than minimum documentation to the extent that such documents are included in the fields searched |
|---|
| Korean Utility models and applications for Utility models: IPC as above |
| Japanese Utility models and applications for Utility models: IPC as above |

| Electronic data base consulted during the international search (name of data base and, where practicable, search terms used) |
|---|
| eKOMPASS (KIPO internal) & Keywords: cable, semi conducting layer, insulation layer, polyolefin, inorganic, polar monomer, content |

**C. DOCUMENTS CONSIDERED TO BE RELEVANT**

| Category* | Citation of document, with indication, where appropriate, of the relevant passages | Relevant to claim No. |
|---|---|---|
| A | KR 10-2013-0057993 A (BOREALIS AG.) 03 June 2013<br>See paragraphs [104]-[106] and claims 1, 2, 5-12. | 1-12 |
| A | KR 10-2013-0043132 A (LS CABLE & SYSTEM LTD.) 29 April 2013<br>See paragraphs [09]-[11], [23] and figure 3. | 1-12 |
| A | KR 10-1318481 B1 (LS CABLE & SYSTEM LTD.) 16 October 2013<br>See paragraph [02] and claims 1-5, 8. | 1-12 |
| A | JP 2006-291022 A (J-POWER SYSTEMS CORP.) 26 October 2006<br>See paragraphs [16]-[20] and figure 1. | 1-12 |
| A | KR 10-1408923 B1 (LS CABLE & SYSTEM LTD.) 17 June 2014<br>See paragraphs [11]-[14]. | 1-12 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 FEBRUARY 2018 (19.02.2018) | **20 FEBRUARY 2018 (20.02.2018)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2017/014344**

| Patent document cited in search report | Publication date | Patent family member | Publication date |
|---|---|---|---|
| KR 10-2013-0057993 A | 03/06/2013 | BR 112012025926 A2 | 28/06/2016 |
| | | CN 102939331 A | 20/02/2013 |
| | | CN 102939331 B | 27/01/2016 |
| | | EP 2558523 A1 | 20/02/2013 |
| | | MX 2012011777 A | 17/12/2012 |
| | | US 2013-0199817 A1 | 08/08/2013 |
| | | WO 2011-128147 A1 | 20/10/2011 |
| KR 10-2013-0043132 A | 29/04/2013 | KR 10-1257152 B1 | 23/04/2013 |
| | | KR 10-1336522 B1 | 03/12/2013 |
| | | KR 10-2011-0104413 A | 22/09/2011 |
| | | US 2012-0001128 A1 | 05/01/2012 |
| | | US 8501049 B2 | 06/08/2013 |
| | | WO 2011-115333 A1 | 22/09/2011 |
| KR 10-1318481 B1 | 16/10/2013 | EP 2711933 A1 | 26/03/2014 |
| | | US 2014-0076609 A1 | 20/03/2014 |
| | | US 9183969 B2 | 10/11/2015 |
| JP 2006-291022 A | 26/10/2006 | NONE | |
| KR 10-1408923 B1 | 17/06/2014 | KR 10-2011-0138958 A | 28/12/2011 |

Form PCT/ISA/210 (patent family annex) (January 2015)